# EUROPEAN PATENT APPLICATION

(11) **EP 3 988 382 A1**
(43) Date of publication of application: **27.04.2022**
(21) Application number: 20203654.7
(22) Date of filing: 23.10.2020
(51) Int. Cl.: B60L 53/50

(54) **A SYSTEM AND METHOD FOR MAXIMIZATION OF RENEWABLE ENERGY RESOURCES ACROSS ELECTRIC VEHICLES, STATIONARY ENERGY STORAGE, AND RENEWABLE ENERGY RESOURCES**

(71) Applicant: Bayerische Motoren Werke Aktiengesellschaft, 80809 München (DE)
(72) Inventor: Batir, Sean, San Jose, CA 95110 (US); Langton, Adam, San Francisco, CA 94129 (US)

(57) **Abstract**

The invention comprises a method for controlling an electric grid (10) by a control system (18), wherein at least one electric supply device (26) of the electric grid (10) produces electric energy (Ep) and at least one electric consumer (16) of the electric grid consumes electric energy (Ec), wherein the amount of produced electric energy (Ep) and the amount of consumed electric energy (Ec) is detected by a detection device (22) of the control system (18), wherein the amount of produced electric energy (Ep) and the amount of consumed electric energy (Ec) is compared by an electronic computing device (20) of the control system (18) and depending on the comparison at least one control signal (26) for controlling the electric supply device (26) and/or the electric consumer (16) is produced by the electronic computing device (20), wherein the electric supply device (26) is a renewable energy resource (12, 14) and depending on the comparison an energy storage device (28) of the electric grid (10) is additionally controlled by the control signal (26), wherein the energy storage device (28) is controlled in such a way that the energy storage device (28) stores electric energy (Es) from the renewable energy resource (12, 14) or provides stored electric energy (Es) for the electric consumer (16). Furthermore, the invention relates to a control system (18) as well as to an electric grid (10).

## Description

The invention relates to a method for controlling an electric grid by a control system according to the independent claim 1. Furthermore, the invention relates to a corresponding control system as well as to a corresponding electric grid.

In response to the threat of climate change, governments throughout the world have set ambitious targets to meet more of their electricity demand with renewable energy generation. While renewable energy avoids the global warming emissions associated with fossil fuel energy sources, renewable energy presents new challenges to the grid. Most renewable energy electricity resources, such as wind and solar energy, are not controllable and dependent on weather conditions, resulting in large and unpredictable changes in energy supply. Renewable energy fluctuates on several different time scales, for example seasonally, daily, and on a second-by-second basis, adding to the challenge grid operators face in maintaining balance of electricity supply and demand. Faced with this uncertainty in electricity supply, grid operators are forced to rely on controlling the demand for electricity as the electricity grid adds more renewable generation. The use of renewable energy resources and electricity generated by electrical energy resources is not consistently tracked or monitored. Currently, the information is obfuscated between the energy utility and a user of the electric grid, making it difficult for energy consumers to respond to changes in renewable energy supply. Developing a method that increases information transparency between the energy utility, energy generation resources, and an electric grid user would offer a potential solution to balancing the energy grid, especially in cases where most or all of the region's electricity supply is derived from renewable generation resources.

WO 2011/144529 A2 relates to a method for controlling the stability of an electric supply grid. A first device designed to exchange electrical energy with the supply grid measures a part of the supply grid, with which the first device is associated for the energy connection, by means of the geographic location thereof. The first device measures parameters for an intended energy exchange. At least one second device associated with the same part of the supply grid for energy exchange measures parameters for an intended energy exchange. The first device performs the energy exchange, considering the parameters of the first and the second device, such that the electric stability of the part of the supply grid is ensured.

WO 2017/008055 A1 describes a system and a method for electric vehicle charging. A preferred charging rate associated with an electric vehicle is determined. The preferred charging rate is compared with a first charging rate associated with a utility service current source and a second charging rate associated with an electrical energy storage device. The utility service current source supports the first charging rate and the electrical energy storage device supports the second charging rate, where the second charging rate is greater than the first charging rate. A transfer switch is instructed to select one of the utility service current source and the electrical energy storage device based on the comparison. The transfer switch is coupled to an electric vehicle charger and supplies current to the electric vehicle charger via the selected current source. The electric vehicle is charged at the preferred charging rate using at least the selected current source.

It is an object of the invention to provide a method, a control system as well as an electric grid, by which a more efficient way of using a renewable energy resource may be realized.

This object is solved by a method, a control system as well as an electric grid according to the independent claims. Advantageous embodiments are disclosed in the dependent claims.

One aspect of the invention relates to a method for controlling an electric grid by an control system, wherein at least one electric supply device of the electric grid produces electric energy and at least one electric consumer of the electric grid consumes electric energy, wherein the amount of produced electric energy and the amount of consumed electric energy is detected by a detection device of the control system, wherein the amount of produced electric energy and the amount of consumed electric energy is compared by an electronic computing device of the control system and depending on the comparison, at least one control signal for controlling the electric supply device and/or the electric consumer is produced by the electronic computing device.

It is envisaged that the electric supply device is a renewable energy resource and depending on the comparison, an energy storage device of the electric grid is additionally controlled by the control signal, wherein the energy storage device is controlled in such a way that the energy storage device stores electric energy from the renewable energy resource or provides stored electric energy for the electric consumer.

Therefore, a maximization of the use of renewable energy resources in a multi-directional manner, across electric vehicles for example, stationary storages, and renewable energy resources is provided.

A stationary storage may in some instances comprise a battery electric storage, a pumped hydro storage, and other mechanical forms of energy storage that store energy in a solid, liquid, or gaseous form factor. The battery may be for example a battery located in an electric motor vehicle.

The condition of when to use the specific energy source, in particular the electric energy directly from the electric supply device or from the energy storage device, is evaluated with an optimization target of balancing the supply and the demand of the renewable energy resources. In some instances, the demand of renewable energy shall be determined by resources that may be comprised of the city, an energy utility, or a generator. In some instances, an energy utility may be defined as an electric utility, distribution utility, gas utility, water utility, transmission operator, and original resource management utility. In some instances, supply of renewable energy and the energy source from which this renewable energy may be derived from, may include solar power, wind power, electric vehicles, hybrid electric vehicles, hybrid petroleum electric vehicles, stationary energy storage, and renewable generators. In some instances, generators may consist of a bio-digester, bio-thermal, waste-to-energy combustion, solar generation, hydro power generation, hydrogen fuel cell, or plasma fusion generation.

According to an advantageous embodiment, the electronic computing device produces the control signal in such a way that the amount of produced electric energy and the amount of consumed electric energy and the amount of stored electric energy are balanced in the grid. Therefore, a balanced grid may be provided.

In another embodiment, the energy storage device is at least one at least partially electrically powered motor vehicle. Therefore, the at least partially electrically powered motor vehicle may comprise an electric storage device for storing electric energy.

Therefore, the at least partially electrically powered motor vehicle may be used for storing electric energy of the electric grid. In particular, a plurality of at least partially electrically powered motor vehicle may be used as a plurality of storage devices in the electric grid. Furthermore, the at least partially electrically powered motor vehicle may be a full electrically powered motor vehicle. Therefore, a more efficient way to establish conditions for renewable energy grid integration and the management across a fully electrified vehicle fleet may be realized.

In another advantageous form of configuration, in addition to the control signal, a motor vehicle signal is produced by the electronic computing device depending on the comparison, in order to navigate the at least partially electrically powered motor vehicle to a charging station of the electric grid for storing the produced electric energy produced by the renewable energy resource. For example, if more energy is produced in the electric grid than it is consumed in the electric grid, the motor vehicle signal may be produced and the at least partially electrically powered motor vehicle is ordered to a charging station in order to store the excess of the electric power. Therefore, it is possible that the energy produced by the renewable energy resource may be used in a more efficient way.

In another embodiment, if the comparison indicates that the amount of produced electric energy is lower than the amount of consumed electric energy, at least one data about charge and location is stored by the electronic computing device. This may be the case where the electricity generation is lower than the electricity demand for electricity by an end device. In this case, the electronic computing device would in a first case either order the storage device to discharge electricity in an amount equal to the difference between electricity supply and electricity demand; or in a second case order a reduction in the demand of electricity from the end device in an amount equal to the difference between electricity supply and electricity demand. In both cases, the end result would be that electricity supply and electricity demand are equal. In particular, the electronic computing device may be a central electronic computing device. In particular, the central electronic computing device may be a server. The server may be, for example, a cloud server or a cluster server. Therefore, a documentation about the production and consumption of the electric energy may be realized.

According to another embodiment, if the comparison indicates that the amount of produced electric energy is larger than the amount of consumed electric energy, the amount of electric energy is stored in the energy storage device. In particular, the excess amount may be stored in the at least partially electrically powered motor vehicle, in particular in the energy storage device of the at least partially electrically powered motor vehicle. In particular, this may be dependent on the location of the local renewable energy excess. Alternatively, the motor vehicle signal may be used to coordinate a swarm of the plurality of at least partially electrically powered motor vehicles to a specific charging location and draw the excess electric energy from the grid.

In the above mentioned methods, at least one datum about charge and location is stored by the electronic computing device.

In another embodiment, if the comparison indicates that the amount of produced electric energy is smaller than the amount of consumed electric energy, a further renewable energy resource is connected to the electric grid by the control system and/or an electric energy consumption of the at least one electric consumer is reduced by the control system. Therefore, a balanced grid may be realized.

In another embodiment, the control signal is additionally produced by the electronic computing device depending on a location of the renewable energy resource and/or depending on a location of the electric consumer. In particular, it is possible that the produced electric energy is consumed in the same region, wherein a less loss of load in the electric grid may be realized.

Another aspect of the invention relates to a control system for controlling an electric grid, wherein the control system comprises at least one electronic computing device and at least one detection device wherein the control system is configured to perform a method according to the preceding aspect. In particular, the method is performed by the control system.

A still further aspect of the invention relates to an electric grid with at least one renewable energy resource, with at least one electric consumer and with a control system according to the preceding aspect.

Advantageous forms of the method are to be regarded as advantageous forms of the control system as well as of the electric grid. The control system as well as the electric grid therefore comprise means for performing the method.

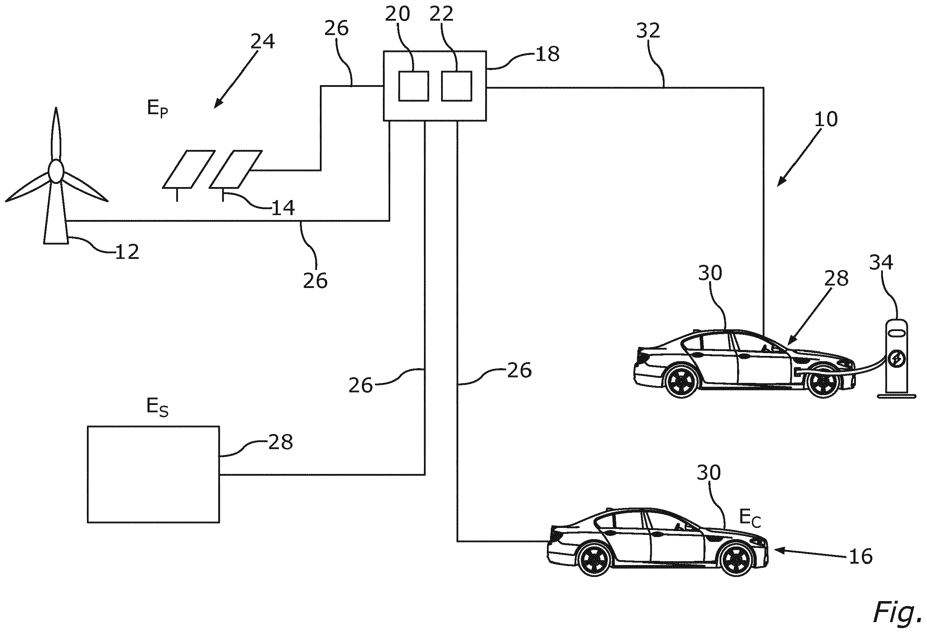

Further features of the invention derive from the claims, the figure and the figure description. The features and combinations of the features mentioned above in the description as well as the features and combinations of features mentioned in the figure description below and/or shown in the figure alone can be used not only in the combination indicated in each case, but also in other combinations or on their own.

The invention is now explained in more detail by means of a preferred embodiment and with reference to the drawing.

The only figure shows a schematic view of an embodiment of an electric grid.

In the figure, the same elements are indicated by the same reference signs.

The only figure shows a schematic view of an embodiment of an electric grid 10 with at least one renewable energy resource 12, 14, with at least one electric consumer 16 and with a control system 18. The control system 18 is for controlling the electric grid 10, wherein the control system 18 comprises at least one electronic computing device 20 and at least one detection device 22.

A method for controlling the electric grid 10 by the control system 18 is provided, wherein at least one electric supply device 24 of the electric grid 10 produces electric energy Ep and the electric consumer 16 of the electric grid 10 consumes electric energy Ec, wherein the amount of produced electric energy Ep and the amount of consumed electric energy Ec is detected by the detection device 22 of the control system 18, wherein the amount of produced electric energy Ep and the amount of consumed electric energy Ec is compared by the electronic computing device 20 of the control system 18 and depending on the comparison at least one control signal 26 for controlling the electric supply device 24 and/or the electric consumer 16 is produced by the electronic computing device 20. The electric supply device 24 is the renewable energy resource 12, 14 and depending on the comparison and energy storage device 28 of the electric grid 10 is additionally controlled by the control signal 26, wherein the energy storage device 28 is controlled in such a way that the energy storage device 28 stores electric energy Es from the renewable energy resource 12, 14 or provides stored electric energy Es for the electric consumer 16.

In particular, the figure shows that the electric consumer 16 may be an at least partially electrically powered motor vehicle 30. The at least partially electrically powered motor vehicle 30 may be a fully electrically powered motor vehicle.

The renewable energy resource may be, for example, a wind turbine 12 or a solar panel 14.

The figure shows that the electronic computing device 20 produces the control signal 26 in such a way that the amount of produced electric energy Ep and the amount of consumed electric energy Ec and the amount of stored electric energy Es are balanced in the electric grid 10.

Furthermore, it is shown that the energy storage device 28 may be provided as the at least partially electrically powered motor vehicle 30. Furthermore, in addition to the control signal 26, a motor vehicle signal 32 may be produced by the electronic computing device 20 depending on the comparison, in order to navigate the at least partially electrically powered motor vehicle 30 to a charging station 34 of the electric grid 10 for storing the produced electric energy Ep produced by the renewable energy resource 12, 14.

Furthermore, if the comparison indicates that the amount of produced electric energy Ep is larger than the amount of consumed electric energy Ec, the excess amount of the electric energy Ep is stored in the energy storage device 28. If the comparison indicates that the amount of produced electric energy Ep is equal to the amount of consumed electric energy Ec, at least one data about charge and location is stored by the electronic computing device 20. If the comparison indicates that the amount of produced electric energy Ep is smaller than the amount of consumed electric energy Ec, a further renewable energy resource 12, 14 may be connected to the electric grid 10 by the control system 18 and/or an electric energy consumption of the at least one electric consumer 16 may be reduced by the control system 18.

Furthermore, the control signal 26 is additionally produced by the electronic computing device 20 depending on a location of the renewable energy resource 12, 14 and/or depending on a location of the electric consumer 16.

In particular, the figures shows a system as well as a method to maximize the use of renewable energy resources 12, 14 in a multi-directional manner, in particular across at least partially electrically powered motor vehicles 30, stationary storages, and renewable energy resources 12, 14. In some instances, a stationary storage may comprise a battery electric storage, a pumped hydro storage, and other mechanical forms of energy storage that store energy in a solid, liquid, or gaseous form factor. The condition of when to use the specific energy source is evaluated under the optimization target of balancing the supply and demand of renewable energy resources 12, 14. In some instances the demand of renewable energy may be determined by sources comprised of the city, an energy utility, or a generator. In some instances, an energy utility may be defined as an energy utility, distribution utility, gas utility, water utility, transmission operator, or regional resource management utility. In some instances, supply of renewable energy and the energy source, from which the renewable energy is derived from, may include solar power, wind power, electric vehicles, hybrid electric vehicles, hybrid petroleum electric vehicles, stationary energy storage, and renewable generators. In some instances, a renewable generator may consist of a bio-digester, bio-thermal, waste-to-energy combustion, solar generation, hydro power generation, or plasma fusion generation.

There exist three conditions. If supply of the renewable energy resources 12, 14 is equal to the demand of renewable energy, then data about charge and location is stored in a live server, in particular in the electronic computing device 20. If the renewable energy is larger than the demand of the electric energy, then the excess energy is stored, for example, in the at least partially electrically powered motor vehicle 30, depending on the location of the local renewable energy excess. Alternatively, the motor vehicle signal 32 may coordinate swarms of electric vehicles to a specific charging station 34 of the electric grid 10 and draw power from the electric grid 10. If the renewable energy is less than a demand of electricity, then a renewable energy resource 12, 14 is added or the load is reduced.

According to an embodiment, one element of gathering this interaction between the vehicle fleets in cities is that over time it is able to recover micro scaled data and models about driver behavior and its relationship with the renewable energy grid across cities.

In particular, the figure shows a system and a method for maximization of renewable energy resources 12, 14 across electric vehicles, stationary energy storage and renewable energy resources 12, 14.

### Reference signs

- 10: Electric grid
- 12: Wind turbine
- 14: Solar panel
- 16: Electric consumer
- 18: Control system
- 20: Electronic computing device
- 22: Detection device
- 24: Electric supply device
- 26: Control signal
- 28: Energy storage device
- 30: At least partially electrically powered motor vehicle
- 32: Motor vehicle signal
- 34: Charging station
- Ep: Produced electric energy
- Ec: Consumed electric energy
- Es: Stored electric energy

## Claims

1. A method for controlling an electric grid (10) by a control system (18), wherein at least one electric supply device (26) of the electric grid (10) produces electric energy (Ep) and at least one electric consumer (16) of the electric grid consumes electric energy (Ec), wherein the amount of produced electric energy (Ep) and the amount of consumed electric energy (Ec) is detected by a detection device (22) of the control system (18), wherein the amount of produced electric energy (Ep) and the amount of consumed electric energy (Ec) is compared by an electronic computing device (20) of the control system (18) and depending on the comparison at least one control signal (26) for controlling the electric supply device (26) and/or the electric consumer (16) is produced by the electronic computing device (20),
**characterized in that**
the electric supply device (26) is a renewable energy resource (12, 14) and depending on the comparison an energy storage device (28) of the electric grid (10) is additionally controlled by the control signal (26), wherein the energy storage device (28) is controlled in such a way that the energy storage device (28) stores electric energy (Es) from the renewable energy resource (12, 14) or provides stored electric energy (Es) for the electric consumer (16).

2. A method according to claim 1,
**characterized in that**
the electronic computing device (20) produces the control signal (26) in such a way that the amount of produced electric energy (Ep) and the amount of consumed electric energy (Ec) and the amount of stored electric energy (Es) are balanced in the electric grid (10).

3. A method according to claim 1 or 2,
**characterized in that**
the energy storage device (28) is provided as a at least one at least partially electrically powered motor vehicle (30).

4. A method according to claim 3,
**characterized in that**
in addition to the control signal (26) a motor vehicle signal (32) is produced by the electronic computing device (20) depending on the comparison, in order to navigate the at least partially electrically powered motor vehicle (30) to a charging station (34) of the electric grid (10) for storing the produced electric energy (Ep) produced by the renewable energy resource (12, 14).

5. A method according to any one of claims 1 to 4,
**characterized in that**,
if the comparison indicates that the amount of produced electric energy (Ep) is equal to the amount of consumed electric energy (Ec), at least one data about charge and location is stored by the electronic computing device (20).

6. A method according to any one of claims 1 to 5,
**characterized in that**,
if the comparison indicates that the amount of produced electric energy (Ep) is larger than the amount of consumed electric energy (Ec), the excess amount of produced electric energy (Ep) is stored in the energy storage device (28).

7. A method according to any one of claims 1 to 6,
**characterized in that**,
if the comparison indicates that the amount of produced electric energy (Ep) is smaller than the amount of consumed electric energy (Ec), a further renewable energy resource (12, 14) is connected to the electric grid (10) by the control system (18) and/or an electric energy consumption of the at least one electric consumer (16) is reduced by the control system (18).

8. A method according to any one of claims 1 to 7,
**characterized in that**
the control signal (26) is additionally produced by the electronic computing device (20) depending on a location of the renewable energy resource (12, 14) and/or depending on a location of the electric consumer (16).

9. A control system (18) for controlling an electric grid (10), wherein the control system (18) comprises at least one electronic computing device (20) and at least one detection device (22), wherein the control system (18) is configured to perform a method according to any one of claims 1 to 8.

10. An electric grid (10) with at least one renewable energy resource (12, 14), with at least one electric consumer (16) and with a control system (18) according to claim 9.
